# EUROPÄISCHE PATENTANMELDUNG

(11) **EP 4 406 888 A1**
(43) Veröffentlichungstag der Anmeldung: **31.07.2024**
(21) Anmeldenummer: 23153080.9
(22) Anmeldetag: 24.01.2023
(51) Int. Cl.: B65G 54/02, B65G 65/00

(54) **AUFNAHMEVORRICHTUNG ZUM OBJEKTTRANSPORT MITTELS EINES IN MAGNETSCHWEBETECHNOLOGIE AUSGEBILDETEN MOVERS UND KOMBINATION EINER DERARTIGEN AUFNAHMEVORRICHTUNG MIT EINER ENTLADEVORRICHTUNG**

(71) Anmelder: SOMIC Verpackungsmaschinen GmbH & Co. KG, 83123 Amerang (DE)
(72) Erfinder: KOEGEL, Christoph, 83134 Prutting (DE); SICKINGER, Mathias, 84539 Ampfing (DE); STEFFINGER, Bernhard, 83549 Eiselfing (DE)
(74) Vertreter: Weickmann & Weickmann PartmbB

(57) **Zusammenfassung**

Die Erfindung betrifft eine Aufnahmevorrichtung (102), welche zur Verbindung mit einem nicht zur Aufnahmevorrichtung (102) gehörenden, in Magnetschwebetechnologie ausgebildeten Mover eingerichtet und für den Transport wenigstens eines ebenfalls nicht zur Aufnahmevorrichtung (102) gehörenden Objekts bestimmt ist. Die Aufnahmevorrichtung (102) umfasst einen Bodenabschnitt (110), dessen obere Fläche (110a) dazu bestimmt ist, das wenigstens eine Objekt während des Transports zu stützen. Erfindungsgemäß ist in der oberen Fläche (110a) des Bodenabschnitts (110) wenigstens eine Vertiefung (112) vorgesehen, die in wenigstens eine Seitenfläche (110b) des Bodenabschnitts (110) mündet. Ferner betrifft die Erfindung eine Kombination einer derartigen Aufnahmevorrichtung (102) mit einer Entladevorrichtung.

## Beschreibung

Die Erfindung betrifft eine Aufnahmevorrichtung, welche zur Verbindung mit einem nicht zur Aufnahmevorrichtung gehörenden, in Magnetschwebetechnologie ausgebildeten Mover eingerichtet und für den Transport wenigstens eines ebenfalls nicht zur Aufnahmevorrichtung gehörenden Objekts bestimmt ist, umfassend einen Bodenabschnitt, dessen obere Fläche dazu bestimmt ist, das wenigstens eine Objekt während des Transports zu stützen.

Aus der zum Zeitpunkt der Einreichung der vorliegenden Anmeldung noch nicht veröffentlichten PCT/EP2022/067894 der Anmelderin ist es bekannt, dass auf einem Mover einer in Magnetschwebetechnologie ausgebildeten Vorrichtung eine Aufnahme angebracht sein kann, die dazu geeignet ist, mit wenigstens einem Objekt beladen zu werden. Wie das wenigstens eine Objekt wieder aus der Aufnahme entnommen werden kann, lässt die PCT/EP2022/067894 hingegen offen.

Aus der US 2020/0030995 A1 ist ganz allgemein eine in Magnetschwebetechnologie ausgebildete Vorrichtung bekannt.

Aufgabe der Erfindung ist es, eine Aufnahmevorrichtung bereitzustellen, die auf einfache Weise entladen werden kann.

Diese Aufgabe wird durch eine Aufnahmevorrichtung der eingangs genannten Art gelöst, bei der in der oberen Fläche des Bodenabschnitts wenigstens eine Vertiefung vorgesehen ist, die in wenigstens eine Seitenfläche des Bodenabschnitts mündet.

In diese wenigstens eine Vertiefung kann zum Entladen des wenigstens einen Objekts ein Entladeabschnitt einer nicht zur Aufnahmevorrichtung gehörenden Entladevorrichtung, beispielsweise ein Zinken einer Entladegabel, eingeführt werden, so dass er das wenigstens eine Objekt untergreift, ohne das wenigstens eine Objekt zu beschädigen, günstigstenfalls sogar, ohne das wenigstens eine Objekt zu berühren. Nach dem Untergreifen kann das wenigstens eine Objekt dann mittels der Entladevorrichtung aus der Aufnahmevorrichtung herausgehoben werden.

Infolge des Untergreifens des wenigstens eines Objekts kann die Entladevorrichtung unabhängig von der Größe und Gestalt des wenigstens einen Objekts stets auf der gleichen Höhe in die Aufnahmevorrichtung eingeführt werden. Eine Anpassung an unterschiedliche Objekte oder unterschiedliche Entladehöhen kann somit vermieden werden. Dies vereinfacht die Steuerung des Entladevorgangs.

Vorteilhafterweise kann eine Mehrzahl von Vertiefungen vorgesehen sein. Dabei kann dann, wenn mehr als zwei Vertiefungen vorgesehen sind, der Abstand zwischen jeweils zwei benachbarten Vertiefungen vorzugsweise gleich groß sein.

In Weiterbildung der Erfindung wird vorgeschlagen, dass sich die wenigstens eine Vertiefung im Wesentlichen geradlinig erstreckt, wobei sie vorzugsweise im Wesentlichen orthogonal zu der Seitenfläche des Bodenabschnitts verläuft. Hierdurch kann die Herstellung vereinfacht werden. Ferner ist es vorteilhaft, wenn bei Vorhandensein von mehreren Vertiefungen wenigstens zwei Vertiefungen zueinander im Wesentlichen parallel verlaufen.

Die aus dem Stand der Technik, insbesondere der US 2020/0030995 A1, bekannten, in Magnetschwebetechnologie ausgebildeten Mover können Geschwindigkeiten von bis zu 3 m/sec und Beschleunigungen von bis zu 30 m/s² erreichen. Um das wenigstens eine Objekt während des Transports sichern zu können, kann die Aufnahmevorrichtung in aus der PCT/EP2022/067894 an sich bekannter Weise ferner einen Seitenwandabschnitt aufweisen, der an einer der Seitenfläche zugeordneten Seite des Bodenabschnitts zumindest abschnittsweise von dem Bodenabschnitt in Höhenrichtung absteht. Vorteilhafterweise können derartige Seitenwandabschnitte an einer Mehrzahl der Seitenflächen, vorzugsweise allen Seitenwandabschnitten des Bodenabschnitts vorgesehen sein.

Um das Entladen der Aufnahmevorrichtung zu erleichtern, kann dann, wenn die Aufnahmevorrichtung wenigstens einen solchen Seitenwandabschnitt aufweist, dieser Seitenwandabschnitt wenigstens eine Durchbrechung aufweisen, die auf Höhe des Bodenabschnitts in die Vertiefung mündet und sich, vorzugsweise im Wesentlichen geradlinig, über die gesamte Höhe des Seitenwandabschnitts erstreckt.

Für den Fall, dass mehrere Vertiefungen vorgesehen sind, wird vorgeschlagen, dass jeweils eine Durchbrechung des Seitenwandabschnitts in jeweils eine Vertiefung mündet.

Vorteilhafterweise ist eine Erstreckung der Durchbrechung in einer Breitenrichtung, die sich im Wesentlichen parallel zu der Seitenfläche erstreckt, wenigstens genauso groß wie eine Erstreckung der wenigstens einen Vertiefung in Breitenrichtung. Auch ist es für eine vereinfachte Entnahme von Vorteil, wenn die wenigstens eine Vertiefung derart in die Durchbrechung mündet, dass sie mit ihrer Breitenerstreckung vollständig in die Durchbrechung mündet. Folglich ist ein nahtloser Übergang zwischen der wenigstens einen Vertiefung und der entsprechenden Durchbrechung möglich.

Für eine erhöhte Flexibilität bei der Bewegung der Mover wird vorgeschlagen, dass die wenigstens eine Vertiefung in zwei einander bezüglich des Bodenabschnitts gegenüberliegende Seitenflächen des Bodenabschnitts mündet. Dies ermöglicht es, den wenigstens einen Entladeabschnitt der Entladevorrichtung von beiden einander gegenüberliegenden Seitenflächen aus in die Vertiefung einzuführen. Ferner ermöglicht es eine derart durchgehende Vertiefung, das wenigstens eine Objekt vollständig zu untergreifen, wodurch die Auflagestabilität des wenigstens einen Objekts erhöht wird. Hierdurch kann ferner ein Abrutschen des wenigstens einen Objekts beim Herausheben aufgrund zu geringen Untergreifens verhindert werden.

Die Flexibilität der Aufnahmevorrichtung und/oder die Bewegung der Mover kann dadurch weiter erhöht werden, dass in der oberen Fläche des Bodenabschnitts wenigstens eine weitere Vertiefung vorgesehen ist, die in wenigstens eine weitere Seitenfläche des Bodenabschnitts mündet, wobei sich die wenigstens eine weitere Vertiefung und die wenigstens eine Vertiefung kreuzen. Hierdurch kann die Aufnahmevorrichtung nicht nur von der wenigstens einen Seitenfläche her, sondern auch von der wenigstens einen weiteren Seitenfläche her entladen werden. Für den Fall einer Aufnahmevorrichtung deren Bodenabschnitt quadratisch oder rechteckig ausgebildet ist, können die wenigstens eine Vertiefung und die wenigstens eine weitere Vertiefung orthogonal zueinander verlaufen. Die wenigstens eine weitere Vertiefung kann die gleichen Eigenschaften aufweisen, wie sie vorstehend für die wenigstens eine Vertiefung diskutiert wurden. Insbesondere kann die wenigstens eine weitere Vertiefung eine im Wesentlichen gleiche Höhe und/oder eine im Wesentlichen gleiche Breite aufweisen wie die wenigstens eine Vertiefung.

Es sei an dieser Stelle angemerkt, dass das wenigstens eine Objekt in der Aufnahme in einer liegenden oder in einer stehenden Position transportiert werden kann. Für den Fall, dass mehrere Objekte von der Aufnahmevorrichtung transportiert werden, können diese Objekte in Form von einem oder mehreren Stapeln, beispielsweise zwei oder vier Stapeln, angeordnet sein.

Um die Gruppierung von Objekten in eine Mehrzahl von Stapeln erleichtern zu können, kann die Aufnahmevorrichtung wenigstens eine von der oberen Fläche des Bodenabschnitts, vorzugsweise orthogonal, abstehende Trennwand umfassen. Die wenigstens eine Trennwand kann auf dem Bodenabschnitt im Wesentlichen parallel oder im Wesentlichen orthogonal zu der wenigstens einen Vertiefung oder im Wesentlichen parallel oder im Wesentlichen orthogonal zu der der wenigstens einen weiteren Vertiefung angeordnet sein und/oder wenigstens eine Durchbrechung aufweisen, die der wenigstens einen Vertiefung und/oder der wenigstens einen weiteren Vertiefung zugeordnet ist.

Damit zwei oder mehrere Aufnahmevorrichtungen gleichzeitig entladen werden können, wird vorgeschlagen, dass ein Durchbrechungsabstand zwischen zwei sich in Höhenrichtung erstreckenden Durchbrechungshalbierenden von jeweils zwei benachbarten Durchbrechungen desselben Seitenwandabschnitts größer oder gleich dem Doppelten eines Randabstands ist, wobei dieser Randabstand ein Abstand zwischen einer sich in Höhenrichtung erstreckenden Durchbrechungshalbierenden einer äußersten Durchbrechung und einem benachbarten Seitenflächenrandabschnitt ist. Auf diese Weise können zwei Aufnahmevorrichtungen ohne oder mit geringem Abstand nebeneinander angeordnet werden. Obgleich die Durchbrechungshalbierende kein physisch vorhandenes Element der Aufnahmevorrichtung ist, sondern nur ein theoretisches Hilfskonstrukt, ist es vorteilhaft anzunehmen, dass sie durch die Breitenmitte der jeweiligen Durchbrechung verläuft.

Um das Einführen des wenigstens einen Entladeabschnitts der Entladevorrichtung in die wenigstens eine Vertiefung erleichtern zu können, kann die wenigstens eine Vertiefung an einem Mündungsabschnitt, an dem sie in die Seitenfläche mündet, eine Einführschräge aufweisen. Beispielsweise kann die Einführschräge als Fase ausgebildet sein.

Im Hinblick auf eine Erleichterung des Beladens der Aufnahmevorrichtung wird in Weiterbildung der Erfindung vorgeschlagen, dass der Seitenwandabschnitt eine Dicke aufweist, die in Höhenrichtung nach unten zum Bodenabschnitt hin zunimmt. Auf diese Weise können die Seitenwandabschnitte als Einweisungsschräge für die in die Aufnahmevorrichtung eingeführten Objekte dienen.

Um unerwünschte Wechselwirkungen mit dem Magnetfeld der Magnetschwebetechnologie zu vermeiden, kann die Aufnahmevorrichtung aus einem elektrisch nichtleitenden und nicht magnetisierbaren Material hergestellt sein, vorzugsweise Kunststoff, beispielsweise ABS-Kunststoff (Acrylnitril-Butadien-Styrol).

Gemäß einem zweiten Aspekt betrifft die Erfindung eine Kombination der vorstehend erläuterten Aufnahmevorrichtung mit einer Entladevorrichtung, wobei die Entladevorrichtung einen Entladeabschnitt umfasst, der dazu ausgebildet ist, von der Seitenfläche her in die wenigstens eine Vertiefung und/oder in die wenigstens eine weitere Vertiefung der Aufnahmevorrichtung eingeführt zu werden, wenn sich die Aufnahmevorrichtung in einer Entladeposition befindet, und aus der wenigstens einen Vertiefung und/oder der wenigstens einen weiteren Vertiefung in Höhenrichtung nach oben aus der Aufnahmevorrichtung herausgeführt zu werden. Somit kann der Entladeabschnitt in die Aufnahmevorrichtung eingeführt werden, ohne mit dem wenigstens einen Objekt in Kontakt zu treten. Hierdurch wird die Beschädigungsgefahr für das wenigstens eine Objekt und auch für den Entladeabschnitt reduziert. Bereits an dieser Stelle sei angemerkt, dass der Entladeabschnitt sich bei einer Bewegung in Höhenrichtung nach oben von der wenigstens einen Vertiefung im Bodenabschnitt in Höhenrichtung wegbewegt, sich insbesondere aus der wenigstens einen Vertiefung herausbewegt.

Die wenigstens eine Vertiefung und/oder die wenigstens eine weitere Vertiefung führt den Entladeabschnitt bei seinem Durchtreten in die Aufnahmevorrichtung, so dass das Einführen des Entladeabschnitts mit höherer Geschwindigkeit erfolgen kann. Ferner kann der Entladeabschnitt mehrere, insbesondere mehrere übereinander gestapelte, Objekte untergreifen und gemeinsam aus der Aufnahmevorrichtung herausheben. Somit kann, anders als bei einem Picken von oben, sei es von Hand oder mittels Saugnäpfen, wenigstens ein Stapel von Objekten, vorzugsweise alle in der Aufnahmevorrichtung aufgenommenen Objekte, durch eine einzige Bewegung des Entladeabschnitts aus der Aufnahmevorrichtung entladen werden, was es erlaubt, die Durchsatzrate zu erhöhen.

Durch die einfache Konstruktion der Kombination von Aufnahmevorrichtung und Entladevorrichtung werden aufwändige Wartungen, wie sie beispielsweise beim Einsatz von Pick-Robotern erforderlich sind, vermieden und das Risiko eines Störfalls reduziert. Ferner kann das erforderliche Investment gering gehalten werden. Die Aufnahmevorrichtung kann mittels eines mit ihr verbundenen Movers präzise auf eine vorbestimmte Entladeposition gesteuert werden. Auch die Höhe des Bodenabschnitts kann eingestellt werden. Hierdurch entfällt der Steuerungsaufwand für die Entladevorrichtung, die somit insgesamt einfacher konstruiert sein kann. Da der Mover die Höhe bereits bei seiner Bewegung in die Entladeposition einstellen kann, entfällt die Einstellung der Höhe der Entladevorrichtung, was den Entladevorgang beschleunigt. Somit kann die hohe Geschwindigkeit der Magnetschwebetechnologie ausgeschöpft werden.

Ferner ist es nicht erforderlich, die Entladeabschnitte an die Größe und Gestalt der jeweiligen Objekte anzupassen, wodurch die Flexibilität der Kombination weiter erhöht und die Kosten weiter gesenkt werden können. Das Entladen von Aufnahmevorrichtungen mit unterschiedlichen Objekten ermöglicht es auf einfache Weise, eine Gruppierung für einen nachgelagerten Arbeitsschritt, beispielsweise einem Verpackarbeitsschritt, zu erstellen.

Zu Beginn des Entladevorgangs kann sich ein Mover mit der Aufnahmevorrichtung in eine vorbestimmte Entladeposition bewegen. In der Entladeposition kann der Entladeabschnitt von der Seitenfläche her in die wenigstens eine Vertiefung eingeführt werden, bis er eine vorbestimmte Position erreicht. Hierzu kann beispielsweise ein Anschlag vorgesehen sein. Anschließend kann sich der Entladeabschnitt in Höhenrichtung nach oben aus der wenigstens einen Vertiefung heraus bewegen, wobei er mit wenigstens einem Objekt in Eingriff tritt. Durch die Bewegung des Entladeabschnitts kann das wenigstens eine Objekt aus der Aufnahmevorrichtung herausgehoben werden. Nach der Entnahme des wenigstens einen Objekts aus der Aufnahmevorrichtung kann die Entladevorrichtung das wenigstens eine Objekt in einer Übergabeposition bereitstellen. Vorteilhafterweise ist die Übergabeposition in Höhenrichtung oberhalb einer Oberkante einer Seitenwand der Aufnahmevorrichtung angeordnet.

In Weiterbildung der Kombination wird vorgeschlagen, dass die Entladevorrichtung ferner einen Basisabschnitt umfasst, von dem der wenigstens eine Entladeabschnitt in Form wenigstens eines Entladezinkens absteht, wobei jeder Entladezinken dazu geeignet ist, in die wenigstens eine Vertiefung und/oder in die wenigstens eine weitere Vertiefung eingeführt zu werden.

Die Breite des Entladeabschnitts, insbesondere des Entladezinkens, kann vorzugsweise kleiner oder gleich sein als die Breite der wenigstens einen Vertiefung und/oder der wenigstens einen weiteren Vertiefung. Zudem kann die Höhe des Entladeabschnitts, insbesondere des Entladezinkens, vorzugsweise kleiner oder gleich sein als die Höhe der wenigstens einen Vertiefung und/oder der wenigstens einen weiteren Vertiefung.

Grundsätzlich ist es denkbar, dass der Entladeabschnitt, insbesondere wenigstens einer der Mehrzahl von Entladezinken, eine geringere Erstreckung in Einführrichtung aufweist als die wenigstens eine Vertiefung oder die wenigstens eine weitere Vertiefung der Aufnahmevorrichtung von der jeweiligen Seitenfläche ausgehend. Vorteilhafterweise jedoch kann der Entladeabschnitt, insbesondere wenigstens einer der Mehrzahl von Entladezinken, eine Länge aufweisen, die größer oder gleich einem Abstands, vorzugsweise einem größten Abstand, zweier einander gegenüberliegender Seitenflächen der Aufnahmevorrichtung ist. So kann eine Beschädigung der Aufnahmevorrichtung aufgrund einer Kollision mit einer Entladevorrichtung vermieden werden, da die Entladevorrichtung, insbesondere wenigstens einer der Mehrzahl von Entladezinken, durch die Vertiefung hindurchragen kann. Wenn der größte Abstand von einander gegenüberliegenden Seitenflächen kleiner oder gleich der Länge des Entladeabschnitts ist, kann die Aufnahmevorrichtung mit der Entladevorrichtung von einer beliebigen Seitenfläche aus entladen werden, sofern in diese wenigstens eine Vertiefung oder wenigstens eine weitere Vertiefung mündet.

Ferner kann an einem zuerst eingeführten Ende des Entladeabschnitts ein Endanschlag vorgesehen sein, der eine Breite aufweist, die kleiner oder gleich der Breite der wenigstens eine Vertiefung und/oder der wenigstens einen weiteren Vertiefung ist.

Die Flexibilität der Anordnung von Aufnahmevorrichtung und Entladevorrichtung für den Entladevorgang kann erhöht werden, wenn in der oberen Fläche des Bodenabschnitts der Aufnahmevorrichtung eine Mehrzahl von Vertiefungen vorgesehen ist, wobei ein Vertiefungsabstand zwischen einer Vertiefungshalbierenden einer Vertiefung zu jeder Vertiefungshalbierenden einer benachbarten Vertiefung gleich ist, und ein Zinkenabstand von einer Zinkenhalbierenden eines Entladezinkens zu jeder Zinkenhalbierenden eines benachbarten Entladezinkens gleich ist. Durch diese gleichmäßigen Vertiefungsabstände und Zinkenabständen kann der Entladeabschnitt in verschiedene Vertiefungen eingeführt werden, ohne dass hierzu gesonderte Anpassungen erforderlich sind.

Zusätzlich kann eine Mehrzahl an weiteren Vertiefungen vorgesehen sein, wobei ein weiterer Vertiefungsabstand zwischen einer weiteren Vertiefungshalbierenden einer weiteren Vertiefung zu jeder weiterem Vertiefungshalbierenden einer benachbarten weiteren Vertiefung gleich sein kann.

Das Einführen des Entladeabschnitts in die wenigstens eine Vertiefung oder die wenigstens eine weitere Vertiefung kann weiter erleichtert werden, wenn der Zinkenabstand im Wesentlichen ein ganzzahliges Vielfaches des Vertiefungsabstands ist. Somit korrespondiert das Verteilungsmuster der Mehrzahl von Entladezinken mit dem Verteilungsmuster der wenigstens einen Vertiefung, beziehungsweise der wenigstens einen weiteren Vertiefung und damit auch mit dem Verteilungsmuster der Durchbrechungen, sofern die Aufnahmevorrichtung einen Seitenwandabschnitt aufweist, der von dem Bodenabschnitt an einer der Seitenfläche zugeordneten Seite des Bodenabschnitts in Höhenrichtung absteht. Vorzugsweise sind sowohl alle Entladezinken als auch alle Vertiefungen und/oder alle weitere Vertiefungen mit jeweils gleichen Zinkenabständen, und Vertiefungsabständen und/oder weiteren Vertiefungsabständen angeordnet. Um Beschädigungen an der Aufnahmevorrichtung und/oder der Entladeeinheit zu vermeiden, wird vorgeschlagen, dass die Durchbrechung der Aufnahmevorrichtung eine Breite aufweist, die größer als eine Breite wenigstens einer Zinke der Entladevorrichtung ist.

Durch die erfindungsgemäße Kombination von Aufnahmevorrichtung und Entladevorrichtung kann der Entladevorgang beschleunigt durchgeführt werden, da, anders als beim herkömmlichen Entladen von oben keine Totzeiten entstehen, bei der sich die Aufnahmevorrichtung bereits an einer Entladeposition befindet, aber die Entladeeinheit erst noch in eine Entladeposition gebracht werden muss. Somit weist die erfindungsgemäße Vorrichtung allein schon deswegen eine höhere Durchsatzrate auf. Die Durchsatzrate kann weiter gesteigert werden, indem der Entladeabschnitt eine Breite aufweist, die wenigstens gleich einem ganzzahligen Vielfachen eines Vertiefungsabstands zwischen zwei benachbarten Vertiefungen ist. Somit können mehrere, vorzugsweise zwei, Aufnahmevorrichtungen gleichzeitig entladen werden. Die Zinkenanzahl kann dabei gleich der Anzahl von Vertiefungen von wenigstens zwei Aufnahmevorrichtungen sein. Bei maximaler Anzahl an Aufnahmevorrichtungen zur Entladung kann der Abstand zwischen den beiden Vertiefungen, die jeweils zu voneinander wegweisenden, äußeren Enden der äußeren Aufnahmevorrichtungen benachbart angeordnet sind, im Wesentlichen gleich dem Abstand der jeweils äußersten Entladezinken sein. Zwischen zwei sich in Entladeposition befindlichen, benachbarten Aufnahmevorrichtungen kann ein vorbestimmter Spalt vorgesehen sein, so dass die Breite des Entladeabschnitts um die Breite des vorbestimmten Spalts erweitert sein kann. Werden mehrere Aufnahmevorrichtungen mit unterschiedlichen Objekten gleichzeitig entladen, so kann die Erstellung einer Folgegruppierung für den nachfolgenden Arbeitsgang vereinfacht werden.

Die Erfindung wird im Folgenden anhand von Ausführungsbeispielen mit Bezug auf die begleitenden Zeichnungen näher erläutert werden. Es stellt dar:
- Figur 1: eine schematische Draufsicht auf ein in Magnetschwebetechnologie ausgebildetes System für den Transport von Objekten;
- Figuren 2a: eine perspektivische Ansicht einer erfindungsgemäßen Aufnahmevorrichtung, wie sie bei dem System der Figur 1 eingesetzt werden kann;
- Figuren 2b: eine schematische Draufsicht der erfindungsgemäßen Aufnahmevorrichtung der Figur 2a;
- Figur 3: eine schematische Darstellung einer erfindungsgemäßen Entladevorrichtung; und
- Figuren 4a und b: Draufsichten auf eine Kombination aus dem Entladeabschnitt der Figur 3 und Aufnahmevorrichtungen gemäß Figur 2a in verschiedenen Entladeanordnungen.

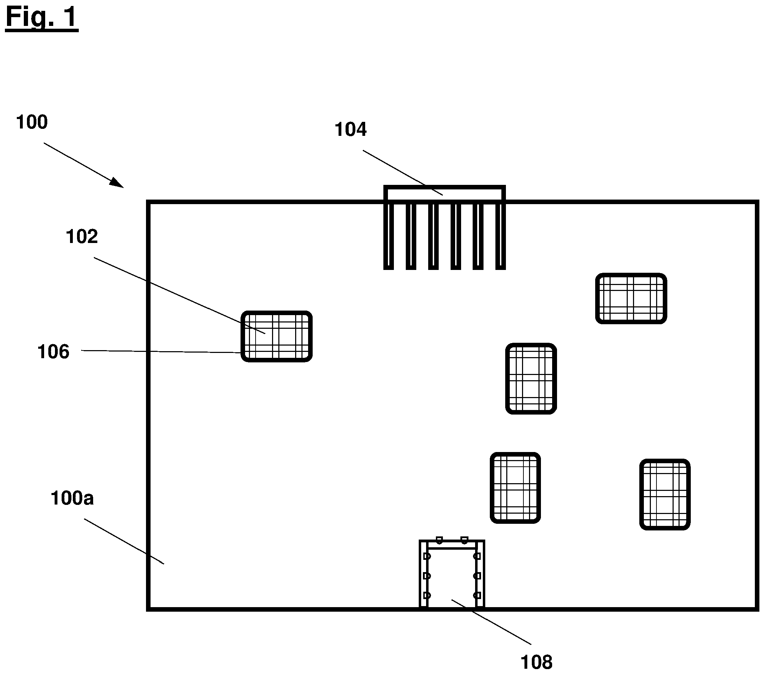

In Figur 1 ist ein in Magnetschwebetechnologie ausgebildetes System ganz allgemein mit 100 bezeichnet. Das System 100 umfasst üblicherweise eine Mehrzahl von Movern 106, die jeweils mit einer erfindungsgemäßen Aufnahmevorrichtung 102 bestückt sind, und eine Entladevorrichtung 104. Die Mover 106 können sich mittels Magnetschwebetechnologie auf einer Bewegungsfläche 100a des Systems 100 bewegen. Zum Beladen der Aufnahmevorrichtung 102 mit wenigstens einem nicht zur Aufnahmevorrichtung 102 gehörenden (nicht dargestellten) Objekt kann ferner eine, beispielsweise herkömmlich ausgebildete, Beladevorrichtung 108 vorgesehen sein.

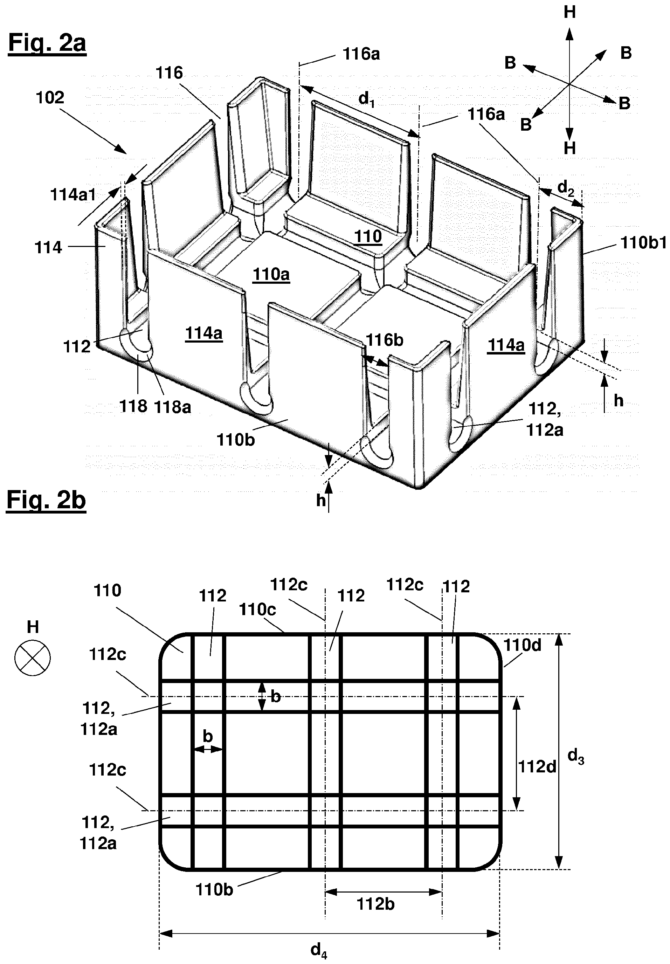

Wie in Figur 2a dargestellt ist, umfasst die Aufnahmevorrichtung 102 einen Bodenabschnitt 110, dessen obere Fläche 110a dazu bestimmt ist, das wenigstens eine Objekt während des Transports zu unterstützen. In der oberen Fläche 110a des Bodenabschnitts 110 ist wenigstens eine Vertiefung 112 vorgesehen, die in wenigstens eine Seitenfläche 110b des Bodenabschnitts 110 mündet. Die wenigstens eine Vertiefung 112 erstreckt sich im Wesentlichen geradlinig und verläuft im Wesentlichen orthogonal zu der Seitenfläche 110b des Bodenabschnitts 110.

Ferner weist die Aufnahmevorrichtung 102 eine Seitenwand 114 auf, die von dem Bodenabschnitt 110 im Wesentlichen orthogonal in Höhenrichtung H absteht. Insbesondere weist die Aufnahmevorrichtung 102 einen Seitenwandabschnitt 114a auf, der von dem Bodenabschnitt 110 an einer der Seitenfläche 110b zugeordneten Seite des Bodenabschnitts 110 in Höhenrichtung H absteht. Dieser Seitenwandabschnitt 114a weist eine Durchbrechung 116 auf, die an einem Mündungsabschnitt 118 in die wenigstens eine Vertiefung 112 mündet.

Bei dem dargestellten Ausführungsbeispiel ist in der oberen Fläche 110a des Bodenabschnitts eine Mehrzahl von Vertiefungen 112 vorgesehen. Wenigstens zwei der Vertiefungen 112, vorzugsweise alle Vertiefungen 112, sind im Wesentlichen zueinander parallel angeordnet. Jede der Vertiefungen 112 mündet in eine Durchbrechung 116.

Die wenigstens eine Vertiefung 112 mündet in zwei einander bezüglich des Bodenabschnitts 110 gegenüberliegende Seitenflächen 110b und 110c (siehe Figur 2b) des Bodenabschnitts 110. Mit anderen Worten erstreckt sich die wenigstens eine Vertiefung 112 von der einen Seitenfläche 110b bis zu der anderen Seitenfläche 110c.

Die wenigstens eine Durchbrechung 116 erstreckt sich im Wesentlichen geradlinig über die gesamte Höhe des zugeordneten Seitenwandabschnitts 114a. In dem Mündungsabschnitt 118 weisen die Vertiefung 112 und die Durchbrechung 116, in die die Vertiefung 112 mündet, eine im Wesentlichen gleiche Erstreckung in einer Breitenrichtung B auf.

Gemäß dem vorliegenden Ausführungsbeispiel weist jede der einander bezüglich des Bodenabschnitts 110 gegenüberliegenden Seitenflächen 110b und 110c (siehe Figur 2b) einen in Höhenrichtung H abstehend Seitenwandabschnitt 114a mit einer zugeordneten Durchbrechung 116 auf, wobei die Durchbrechung 116 in die wenigstens eine Vertiefung 112 mündet.

Um die Flexibilität der Aufnahmevorrichtung 102 zu erhöhen, ist in der oberen Fläche 100a des Bodenabschnitts 110 wenigstens eine weitere Vertiefung 112a vorgesehen, die in wenigstens eine weitere Seitenfläche 110d des Bodenabschnitts 110 mündet. Die wenigstens eine Vertiefung 112 und die wenigstens eine weitere Vertiefung 112a kreuzen einander und verlaufen im Wesentlichen orthogonal zueinander.

An dieser Stelle sei darauf hingewiesen, dass die wenigstens eine weitere Vertiefung 112a vorteilhafterweise die gleichen Eigenschaften wie die wenigstens eine Vertiefung 112 aufweist, so dass zur Vermeidung von Wiederholungen auf deren Beschreibung verwiesen werden kann. Beispielsweise mündet die wenigstens eine weitere Vertiefung 112a in eine Durchbrechung 116 eines Seitenwandabschnitts 114a. Ferner weist die wenigstens eine weitere Vertiefung 112a eine im Wesentlichen gleiche Höhe h und eine im Wesentlichen gleiche Breite b wie die wenigstens eine Vertiefung 112 auf.

Ein Durchbrechungsabstand d₁ zwischen zwei sich in Höhenrichtung H erstreckenden Durchbrechungshalbierenden 116a (strichpunktiert dargestellt) von zwei benachbarten Durchbrechungen 116 desselben Seitenwandabschnitts 114a ist größer als, vorzugsweise mehr als doppelt so groß wie, ein Randabstand d₂. Mit Randabstand d₂ wird ein Abstand zwischen einer Durchbrechungshalbierenden 116a und einem benachbarten Seitenflächenrandabschnitt 110b1 bezeichnet.

Zur Erleichterung des Eintritts der Entladevorrichtung 104 in die wenigstens eine Vertiefung 112 und/oder die wenigstens eine weitere Vertiefung 112a, weist wenigstens eine Vertiefung 112 und/oder wenigstens eine weitere Vertiefung 112a an dem Mündungsabschnitt 118 eine Einführschräge 118a auf.

Da das Risiko einer Kollision zwischen der Aufnahmevorrichtung 102 und der Entladevorrichtung 104 im Mündungsabschnitt 118 am größten ist, kann der Seitenwandabschnitt 114a eine Dicke 114a1 aufweisen, die an dem Bodenabschnitt 110 am größten ist. In Höhenrichtung H kann die Dicke 114a1 des Seitenwandabschnitts 114a abnehmen. Hierdurch kann der Seitenwandabschnitt 114a zudem eine leichte Trichterform aufewisen, die das Beladen der Aufnahmevorrichtung 102 mit Objekten erleichtert.

Es sei darauf hingewiesen, dass die Aufnahmevorrichtung 102 in dem in den Figuren 2a und 2b dargestellten Ausführungsbeispiel drei Vertiefungen 112 und zwei weitere Vertiefungen 112a aufweist.

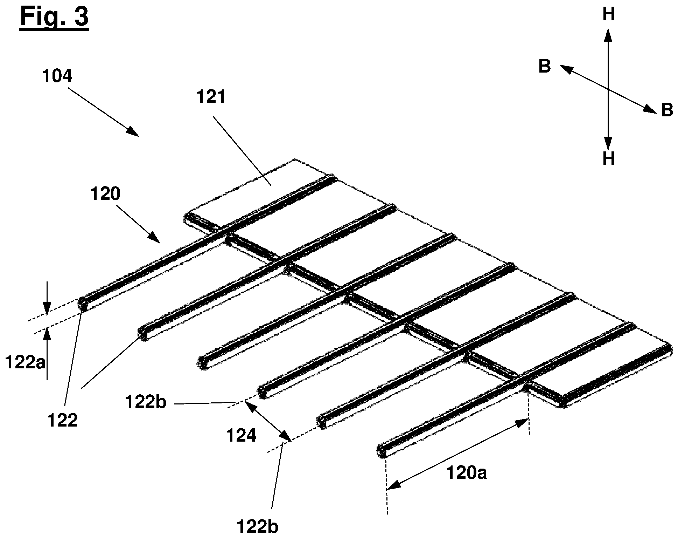

Eine erfindungsgemäße Entladevorrichtung 104 ist in Figur 3 schematisch dargestellt. Diese Entladevorrichtung 104 umfasst einen Entladeabschnitt 120, der dazu eingerichtet ist, von der Seitenfläche 110b des Bodenabschnitts 110 her in wenigstens eine Vertiefung 112 beziehungsweise in wenigstens eine weitere Vertiefung 112a der Aufnahmevorrichtung 102 eingeführt zu werden, und einen Basisabschnitt 121. Ferner ist die Entladevorrichtung 104 dazu eingerichtet, den Entladeabschnitt 120 mittels einer nicht dargestellten Hubvorrichtung in Höhenrichtung H zu bewegen.

Der Entladeabschnitt 120 umfasst in dem in Figur 3 dargestellten Ausführungsbeispiel eine Mehrzahl von (hier sechs) Entladezinken 122, die von dem Basisabschnitt 121 abstehen. Jeder der Zinken 122 ist dazu geeignet, in eine Vertiefung 112 beziehungsweise in eine weitere Vertiefung 112a einzutreten. Hierzu weist der Entladeabschnitt 120, nämlich jeder Zinken 122, eine Höhe 122a auf, die kleiner oder gleich einer Erstreckung der wenigstens einen Vertiefung 112 beziehungsweise der wenigstens einen weiteren Vertiefung 112a in Höhenrichtung H, nämlich der Höhe h, sein kann.

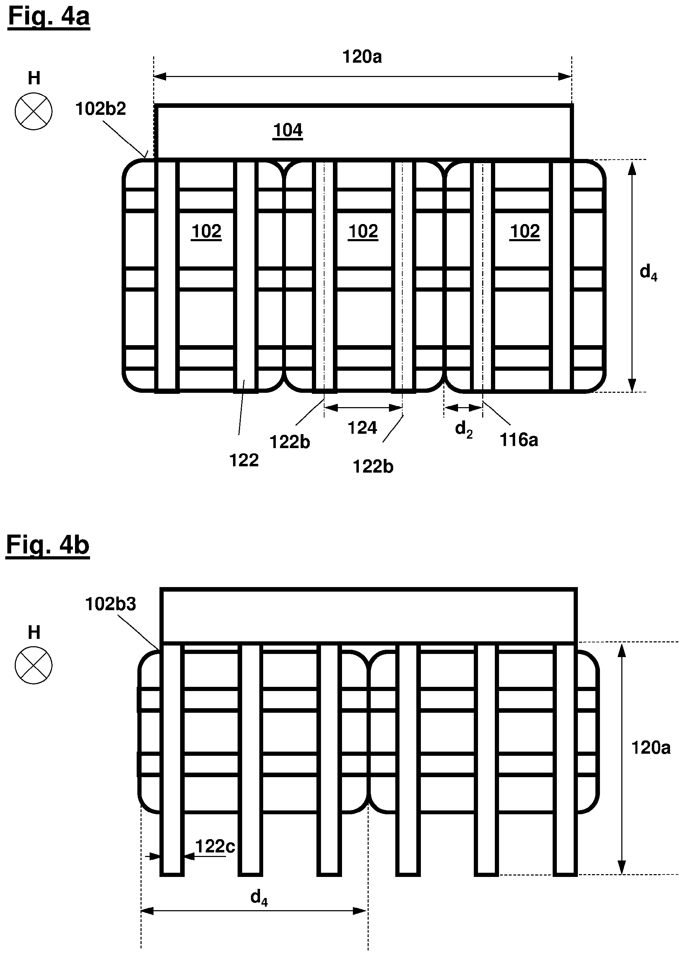

Figuren 4a und 4b zeigen eine Draufsicht auf eine Kombination der Entladevorrichtung 104 mit einer Mehrzahl von Aufnahmevorrichtungen 102. Während in Figur 4a der Entladeabschnitt 120 mit insgesamt drei Aufnahmevorrichtungen 102 von deren kürzerer Seitenfläche 110b2 her zusammenwirkt, wirkt der Entladeabschnitt 120 in Figur 4b mit zwei Aufnahmevorrichtungen 102 von deren längerer Seitenfläche 102b3 her zusammen.

Der Entladeabschnitt 120 weist eine Länge 120a auf, die größer oder gleich einer Länge d₄ des Bodenabschnitts 110 der Aufnahmevorrichtung 102 ist.

Wie bereits erwähnt ist eine Mehrzahl von Vertiefungen 112, 112a vorgesehen, wobei der Vertiefungsabstand 112b der Vertiefungshalbierenden 112c (in Figur 2b strichpunktiert dargestellt) jeweils zweier benachbarter Vertiefungen 112, 112a gleich groß ist. Mit anderen Worten sind sowohl die Vertiefungen 122 als auch die weiteren Vertiefungen 122a gleichverteilt in dem Bodenabschnitt 110 angeordnet.

Analoges gilt für einen Zinkenabstand 124 der Zinkenhalbierenden 122b (in Figur 4a strichpunktiert dargestellt) zwischen jeweils zwei einander benachbarten Zinken 122, wobei der Zinkenabstand 124 vorzugsweise ein ganzzahliges Vielfaches des Vertiefungsabstands 112b sein kann.

## Patentansprüche

1. Aufnahmevorrichtung (102), welche zur Verbindung mit einem nicht zur Aufnahmevorrichtung (102) gehörenden, in Magnetschwebetechnologie ausgebildeten Mover (106) eingerichtet und für den Transport wenigstens eines ebenfalls nicht zur Aufnahmevorrichtung (102) gehörenden Objekts bestimmt ist, umfassend einen Bodenabschnitt (110), dessen obere Fläche (110a) dazu bestimmt ist, das wenigstens eine Objekt während des Transports zu stützen, **dadurch gekennzeichnet, dass** in der oberen Fläche (110a) des Bodenabschnitts (110) wenigstens eine Vertiefung (112) vorgesehen ist, die in wenigstens eine Seitenfläche (110b) des Bodenabschnitts (110) mündet.

2. Aufnahmevorrichtung nach Anspruch 1,
**dadurch gekennzeichnet, dass** die wenigstens eine Vertiefung (112, 112a) sich im Wesentlichen geradlinig erstreckt, wobei sie vorzugsweise im Wesentlichen orthogonal zu der Seitenfläche (110b) des Bodenabschnitts (110) verläuft.

3. Aufnahmevorrichtung nach Anspruch 1 oder 2,
**dadurch gekennzeichnet, dass** dann, wenn die Aufnahmevorrichtung (102) wenigstens einen Seitenwandabschnitt (114a) aufweist, der an einer der Seitenfläche (110b) zugeordneten Seite des Bodenabschnitts (110) zumindest abschnittsweise von dem Bodenabschnitt (110) in Höhenrichtung absteht, dieser Seitenwandabschnitt (114a) wenigstens eine Durchbrechung (116) aufweist, die auf Höhe des Bodenabschnitts (110) in die Vertiefung (112, 112a) mündet und sich, vorzugsweise im Wesentlichen geradlinig, über die gesamte Höhe des Seitenwandabschnitts (114a) erstreckt.

4. Aufnahmevorrichtung nach Anspruch 3,
**dadurch gekennzeichnet, dass** die wenigstens eine Vertiefung (112, 112a) in zwei einander bezüglich des Bodenabschnitts (110) gegenüberliegende Seitenflächen (110b, 110c) des Bodenabschnitts (110) mündet.

5. Aufnahmevorrichtung nach einem der vorangehenden Ansprüche,
**dadurch gekennzeichnet, dass** in der oberen Fläche (110a) des Bodenabschnitts (110) wenigstens eine weitere Vertiefung (112a) vorgesehen ist, die in wenigstens eine weitere Seitenfläche (110d) des Bodenabschnitts (110) mündet, wobei sich die wenigstens eine weitere Vertiefung (112a) und die wenigstens eine Vertiefung (112) kreuzen.

6. Aufnahmevorrichtung nach Anspruch 3 und gewünschtenfalls Anspruch 4 oder 5,
**dadurch gekennzeichnet, dass** ein Durchbrechungsabstand (d₁) zwischen zwei sich in Höhenrichtung (H) erstreckenden Durchbrechungshalbierenden (116a) von jeweils zwei benachbarten Durchbrechungen (116) desselben Seitenwandabschnitts (114a) größer oder gleich dem Doppelten eines Randabstands (d₂) ist, wobei der Randabstand (d₂) ein Abstand zwischen einer sich in Höhenrichtung (H) erstreckenden Durchbrechungshalbierenden (116a) einer randständigen Durchbrechung (116b) und einem benachbarten Seitenflächenrandabschnitt (110b1) ist.

7. Aufnahmevorrichtung nach Anspruch 3 und gewünschtenfalls einem der Ansprüche 4 bis 6,
**dadurch gekennzeichnet, dass** die wenigstens eine Vertiefung (112, 112a) an einem Mündungsabschnitt (118), an dem die wenigstens eine Vertiefung (112, 112a) in die Seitenfläche (110b, 110d) mündet, eine Einführschräge (118a) umfasst.

8. Aufnahmevorrichtung nach Anspruch 3 und gewünschtenfalls einem der Ansprüche 4 bis 7,
**dadurch gekennzeichnet, dass** der Seitenwandabschnitt (114a) eine Dicke (114a1) aufweist, die in Höhenrichtung nach unten zum Bodenabschnitt (110) hin zunimmt.

9. Kombination der Aufnahmevorrichtung (102) gemäß einem der Ansprüche 1 bis 8 und einer Entladevorrichtung (104),
**dadurch gekennzeichnet, dass** die Entladevorrichtung (104) wenigstens einen Entladeabschnitt (120) umfasst, der dazu ausgebildet ist, von der Seitenfläche (110b) her in die wenigstens eine Vertiefung (112) und/oder in die wenigstens eine weitere Vertiefung (112a) der Aufnahmevorrichtung (102) eingeführt zu werden, wenn sich die Aufnahmevorrichtung (102) in einer Entladeposition befindet, und aus der wenigstens einen Vertiefung (112) und/oder der wenigstens einen weiteren Vertiefung (112a) in Höhenrichtung (H) nach oben aus der Aufnahmevorrichtung (102) herausgeführt zu werden.

10. Kombination nach Anspruch 9,
**dadurch gekennzeichnet, dass** die Entladevorrichtung (104) ferner einen Basisabschnitt (121) umfasst, von dem der wenigstens eine Entladeabschnitt (120) in Form wenigstens eines Entladezinkens (122) absteht, wobei jeder Entladezinken (122) dazu geeignet ist, in die wenigstens eine Vertiefung (112) und/oder in die wenigstens eine weitere Vertiefung (112a) eingeführt zu werden.

11. Kombination nach Anspruch 9 oder 10,
**dadurch gekennzeichnet, dass** der Entladeabschnitt (120), insbesondere jeder Entladezinken (122), eine Höhe (122a) aufweist, die kleiner oder gleich der Höhe (h) der wenigstens einen Vertiefung (112) und/oder der Höhe (h) der wenigstens einen weiteren Vertiefung (112a) ist.

12. Kombination nach einem der Ansprüche 9 bis 11,
**dadurch gekennzeichnet, dass** der Entladeabschnitt (120), insbesondere wenigstens einer der Mehrzahl von Entladezinken (122), eine Länge (120a) aufweist, die größer oder gleich einem Abstand (d₃, d₄), vorzugsweise einem größten Abstand (d₄), von zwei einander gegenüberliegenden Seitenflächen (110b, 110c) des Bodenabschnitts (110) der Aufnahmevorrichtung (102) ist.

13. Kombination nach einem der Ansprüche 9 bis 12,
**dadurch gekennzeichnet, dass** in der oberen Fläche (110a) des Bodenabschnitts (110) der Aufnahmevorrichtung eine Mehrzahl von Vertiefungen (112, 112a) vorgesehen ist, wobei ein Vertiefungsabstand (112b) zwischen einer Vertiefungshalbierenden (112c) einer Vertiefung(112, 112a) zu jeder Vertiefungshalbierenden (112c) einer benachbarten Vertiefung (112, 112a) gleich ist, und ein Zinkenabstand (124) von einer Zinkenhalbierenden (122b) eines Entladezinkens (122) zu jeder Zinkenhalbierenden (122b) eines benachbarten Entladezinkens (122) gleich ist.

14. Kombination nach Anspruch 13, rückbezogen,
**dadurch gekennzeichnet, dass** der Zinkenabstand (124) im Wesentlichen ein ganzzahliges Vielfaches des Vertiefungsabstands (112b, 112d) ist.

15. Kombination nach einem der Ansprüche 9 bis 14,
**dadurch gekennzeichnet, dass** der Entladeabschnitt (120) eine Breite (120a) aufweist, die wenigstens gleich einem ganzzahligen Vielfachen eines Vertiefungsabstands (112b, 112d) zwischen zwei benachbarten Vertiefungen (112, 112a) ist.
